Europäisches Patentamt

European Patent Office

Office européen des brevets

(19)

(11) Numéro de publication : **0 490 724 A1**

## (12) DEMANDE DE BREVET EUROPEEN

(21) Numéro de dépôt : **91403203.2**

(22) Date de dépôt : **26.11.91**

(51) Int. Cl.⁵ : **F16F 13/00, B60G 15/06, B60G 7/02**

(30) Priorité : **13.12.90 FR 9015748**

(43) Date de publication de la demande :
**17.06.92 Bulletin 92/25**

(84) Etats contractants désignés :
**AT BE CH DE DK ES FR GB GR IT LI LU NL SE**

(71) Demandeur : **CAOUTCHOUC MANUFACTURE ET PLASTIQUES**
**143 bis, rue Yves Le Coz**
**F-78000 Versailles (FR)**

(72) Inventeur : **De Fontenay, Etienne**
**4 route de Moulins**
**F-58300 Decize (FR)**

(54) **Attache hydroélastique de suspension et biélette de liaison élastique liée à cette attache.**

(57) Attache hydroélastique de suspension, formée de deux membranes épaisses en composition élastomérique (14) enfermant un liquide de faible viscosité, l'ensemble formant cartouche hydroélastique dans laquelle un clapet coulissant garni de joints d'étanchéité (17) peut se débattre dans une coupelle de confinement rigide (16), clapet lui-même contourné par circulation d'une colonne liquide de fuite (18) le long d'un jeu de forte section (19), en provoquant un amortissement de haut niveau des vibrations transmises, dues au mouvement résonant entre masses.
Application à la suspension sur véhicule et sur machine à poste fixe.

FIG. 2

EP 0 490 724 A1

L'invention concerne le domaine des liaisons élastiques intervenant dans les suspensions, plus particulièrement, les suspensions de roues et de moteur de véhicules, mais également les suspensions de machines à poste fixe. Elle est, plus précisément, une application de l'amortissement hydraulique intégré à ladite liaison élastique, d'une part en tant qu'attache de suspension, au point haut de fixation sur chassis d'un amortisseur jouant le rôle de pivot de direction dans l'ensemble dit MacPherson, d'autre part en tant que liaison dite biellette anti-couple pour la suspension de groupe motopropulseur sur ledit chassis.

L'architecture des suspensions des véhicules automobiles est de plus en plus standardisée et le terme de "strut" ou jambe de force est à peu près généralisé pour l'ensemble portant le ressort hélicoïdal associé à un amortisseur télescopique. La rotation de tige de ce dernier assure la fonction de pivot de direction dans un train avant dit MacPherson. Que le triangle inférieur de guidage intègre ou non la barre anti-dévers (vrai ou faux MacPherson), la présence d'une rotule au point extérieur dudit triangle assure simultanément la possibilité de débattement vertical et de pivotement du tube d'amortisseur qui porte la fusée de roue directrice. L'usage de cette structure se rencontre d'ailleurs éventuellement sur un train arrière où, soit les microbraquages d'une triangulation sophistiquée, soit la géométrie due à une véritable épure de direction, pour des véhicules à quatre roues directrices, sont permis par l'existence de ladite rotule.

Ainsi, la géométrie d'un train avant, comme d'un train arrière, est déterminée par la fixation, sur la caisse, de l'extrémité supérieure d'une tige d'amortisseur autour de laquelle pivote le tube et le porte-fusée, guidés par le triangle du système MacPherson.

Dans des conditions analogues, la biellette anti-couple d'une suspension moteur assure la réaction à l'effort moteur dans une direction sensiblement horizontale.

Dans les suspensions de roues d'un train classique, connues de l'art antérieur, lorsqu'un ressort à boudin assure la flexibilité verticale, le pivotement est permis par appui complémentaire d'une coupelle, le plus généralement sa coupelle supérieure, sur une butée à billes qui transmet la charge permanente à la caisse.

Cette fixation complémentaire a, comme celle de la tige d'amortisseur qui lui est concentrique, besoin d'un filtrage limitant les vibrations transmises à travers le ressort. Cette fonction est très généralement assurée par des pièces en caoutchouc vulcanisé, intimement liées à la coupelle et à la bague de fixation correspondante.

Les deux pièces élastiques concentriques assurant ces fonctions peuvent être associées, dans des perfectionnements introduisant un amortissement hydraulique sur le point de fixation supérieure d'un amortisseur de type MacPherson, l'une portant l'attache de la tige de l'amortisseur, l'autre, outre la charge permanente, recevant l'effort de butée dynamique en fin de course par suite du choc du tube de l'amortisseur sur une butée d'élastomère appropriée.

Une voie pour améliorer le confort vibratoire sous l'effet des sollicitations de la roue est décrite dans les documents FR 2.587.774 et FR 2.623.866 de TOKAI RUBBER. Ces perfectionnements s'appliquent exclusivement à la liaison de la tige d'amortisseur sur la caisse - ou application analogue - sans que soit concernée la charge permanente portée par le ressort de suspension. Le dispositif assemble, en une pièce unique, deux chambres opposées, reliées par un canal de liquide enroulé sur leur diamètre extérieur, canal de grande longueur et de section notable.

Ces dispositifs, dont les effets d'inertie bloquent la déformation si l'amortisseur exerce des efforts rapides, autorisent, cependant, des débattements lors de mouvements plus lents grâce au guidage, soit par une bague concentrique à la fixation, dont l'élastomère est précontraint pour en améliorer la tenue en fatigue, dans le premier document cité, soit par une partie annulaire à débattement radial, dans le second. Cependant, ces débattements sont limités grâce à l'intégration, également, de butées d'élastomère dans les chambres hydrauliques.

La conception de ces dispositifs atteint donc une grande complexité, pour assurer la seule fonction, très limitée, d'un point de fixation élastique ; la satisfaction des autres fonctions concernées - telle la fonction de maintien d'une force permanente - atteint, par ailleurs, une complexité analogue, afin d'assurer l'homogénéité du niveau de qualité exigé sur le filtrage acoustique ou vibratoire des liaisons entre le chassis et une suspension d'automobile ou de groupe motopropulseur.

L'analyse de l'art antérieur montre qu'aucun des dispositifs connus ne remplit, encore, de façon satisfaisante et avec simplicité, l'ensemble de ces fonctions, c'est à dire la possibilité, dans toutes les directions, de transmettre un effort permanent notable tout en désolidarisant efficacement la liaison élastique aux fréquences acoustiques.

L'objectif de la présente invention est d'intégrer dans une pièce unique les différentes fonctions assurées, et ce, à titre d'exemples non limitatifs, soit par le point haut de fixation sur la caisse d'un véhicule, dans une suspension MacPherson, soit par le point de fixation sur caisse d'une biellette anti-couple, et d'y apporter un amortissement hydraulique approprié, par un ensemble simple, de coût limité, bien adapté à la satisfaction des besoins.

L'invention réside donc dans une attache hydroélastique de suspension sur véhicule ou sur machine à poste fixe, formée de deux membranes épaisses en composition élastomérique enfermant un volume relativement réduit de liquide, l'ensemble constituant une cartouche hydroélastique à colonne liquide de fluide de faible viscosité destinée à neutraliser la transmission de vibrations pour un point d'attache sur un chassis.

L'invention est caractérisée en ce que, dans ladite cartouche hydroélastique, un clapet garni de joints d'étanchéité, coulissant sur un axe cylindrique, est libre de se débattre, axialement et radialement, dans une coupelle de confinement rigide, en ce que ledit clapet coulissant garni de joints d'étanchéité est, lui-même, contourné par la circulation de ladite colonne liquide de fuite faisant communiquer entre elles, par un jeu de forte section, les chambres opposées sur les deux faces dudit clapet coulissant muni de joints d'étanchéité, et en ce que le rôle inertiel de ladite colonne liquide de fuite, lors de l'application d'un effet de butée, provoque un amortissement de haut niveau des vibrations transmises, dues au mouvement résonant entre masses.

Dans une application préférentielle, au point haut de fixation d'un amortisseur télescopique de type MacPherson, portant la fusée d'une roue, directrice ou non, la liaison élastique est libérée des efforts permanents de suspension par report de ceux-ci sur une pièce de fixation élastique concentrique à ladite attache hydroélastique.

Dans une autre application de suspension d'un groupe motopropulseur, la réaction aux couples moteur ou frein moteur est assurée par une biellette, dite anti-couple, ou bien par une butée jouant le même rôle, à travers une attache hydroélastique selon l'invention.

L'invention sera mieux comprise à la lecture de la description accompagnant les dessins dans lesquels :

– la figure 1 est une coupe d'ensemble, par l'axe de la tige, d'un amortisseur et des pièces qui environnent son point de fixation supérieur sur caisse ;

– la figure 2 est un agrandissement de la même coupe, portant sur la cartouche hydroélastique assurant l'attache hydroélastique du point de fixation conformément à l'invention.

– la figure 3 présente, en perspective, en plan et en coupe, la pièce formant clapet coulissant garni de joints d'étanchéité, caractéristique de l'invention.

– la figure 4 représente une variante de disposition de l'attache hydroélastique permettant une réalisation en grande série et en explicite la fabrication ;

– la figure 5 illustre, en demi-coupe axiale, l'application à une biellette de triangulation de train ou de reprise de couple, de l'attache hydroélastique conforme à l'invention ;

– la figure 6 décrit, en coupe axiale, l'usage de la cartouche hydroélastique comme attache hydroélastique de suspension venant alternativement en butée simple sur deux appuis rigides.

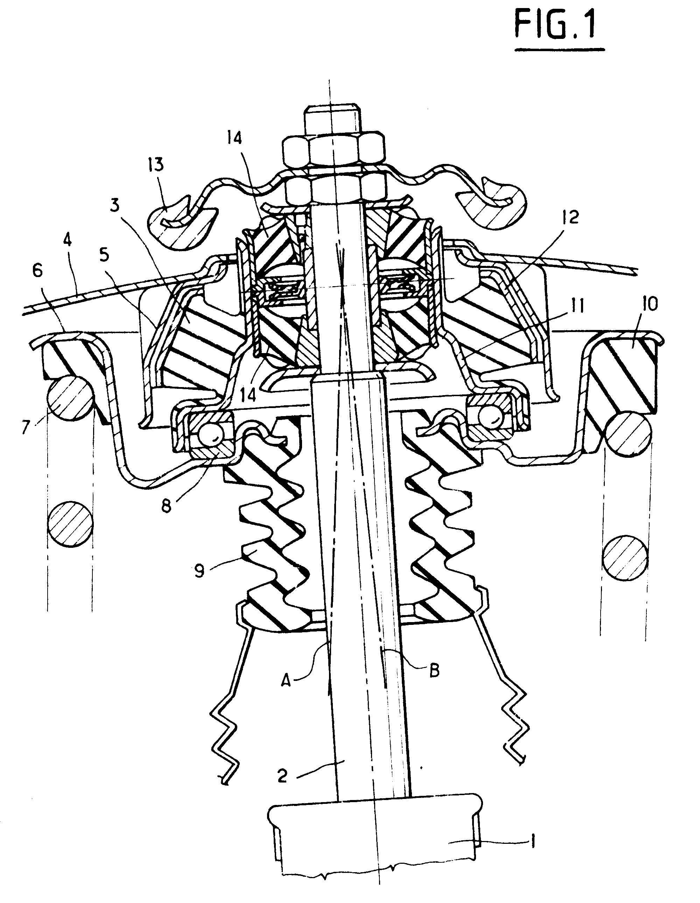

La figure 1 montre, en coupe par un plan passant par l'axe de la tige de l'amortisseur, l'ensemble des pièces environnant le point de fixation supérieur sur caisse dudit amortisseur formant strut d'une suspension de type MacPherson.

L'amortisseur formant strut (1), télescopique, à grand débattement vertical, porte à son extrémité inférieure la fusée de roue d'une suspension de roue directrice et, pour cette raison, pivote autour de sa tige d'amortisseur (2).

Leur axe commun est sensiblement vertical, mais, dans les débattements du triangle inférieur de guidage (non représenté), peut osciller autour de la pièce de fixation élastique (3), d'un faible angle, dont les limites sont indiquées par les axes (A) et (B).

Au-dessous de ladite pièce de fixation élastique (3), qui est solidaire de la caisse de véhicule (4), par l'intermédiaire éventuellement d'un renfort de fixation (5), se trouve la coupelle supérieure (6) du ressort de suspension(7), pivotant sur une butée à billes (8).

Dans la disposition représentée, ladite coupelle supérieure (6) porte, également, la butée de limitation dynamique des débattements (9), ce qui libère de cette contrainte la fixation haute de la tige d'amortisseur (2), par son contact occasionnel avec l'extrémité de l'amortisseur formant strut (1).

Malgré l'existence, le plus fréquemment, d'un appui élastique du ressort (10) sur sa coupelle supérieure (6) - qui permet, outre un premier filtrage des vibrations, de simplifier les formes de celle-ci - l'appui de la butée à billes (8) est encore, lui-même, bien filtré contre la transmission solidienne de toutes vibrations. L'incorporation à la pièce de fixation élastique (3) d'une couche en composition élastomérique d'épaisseur supérieure au centimètre assure à ce filtrage un niveau élevé. Intimement liée à une armature interne (11) qui porte la butée à billes (8) et à une armature externe (12) qui la rend solidaire du renfort de fixation (5), ladite couche en composition élastomérique, sensiblement conique, forme la pièce de fixation élastique (3) et permet les basculements de la tige d'amortisseur (2) entre les limites des axes (A) et (B).

La couche en composition élastomérique est, de par sa forme, suffisamment rigide, axialement et radialement, pour assurer la fonction d'appui autour duquel rotule tout l'amortisseur quelles que soient les contraintes. Les contraintes radiales sont dues à des efforts parasites sur la tige d'amortisseur (2), les contraintes axiales sont exercées, d'une part de manière permanente, par le ressort de suspension (7), d'autre part de manière exceptionnelle, par la butée de limitation dynamique des débattements (9), dans les deux cas à travers la butée à billes (8).

Par ailleurs, une butée de détente (13), fixée par une coupelle métallique au bout de la tige d'amortisseur (2), limite, éventuellement, dans des mouvements dynamiques exceptionnels, un risque de traction exagérée de la pièce de fixation élastique (3), lors de la détente, grâce d'un appui antagoniste sur la caisse du véhicule (4) et son renfort de fixation (5).

Ainsi libérée de tous efforts exceptionnels, la fixation de la tige d'amortisseur (2) devient alors une pièce simple, symétrique, et pouvant tenir - par simple emmanchement - dans une partie cylindrique de l'appui permanent assuré par l'armature interne (11). Ladite pièce simple constitue une cartouche hydroélastique enfermée sur chacune de ses deux faces par une membrane épaisse en composition élastomérique (14) apportant les rigidités radiales et axiales voulues pour l'application ; les grandes dimensions des membranes épaisses en composition élastomérique (14) sont garantes d'une grande tenue à la fatigue.

Ces deux membranes épaisses en composition élastomérique (14) enferment un volume relativement réduit de liquide d'amortissement, volume contenant, au voisinage du plan de symétrie, un clapet coulissant garni de joints d'étanchéité enfermé dans une coupelle de confinement rigide.

Un montage tout à fait analogue à celui représenté pour une suspension de véhicule pourrait également assurer la suspension à grande flexibilité d'une machine à poste fixe.

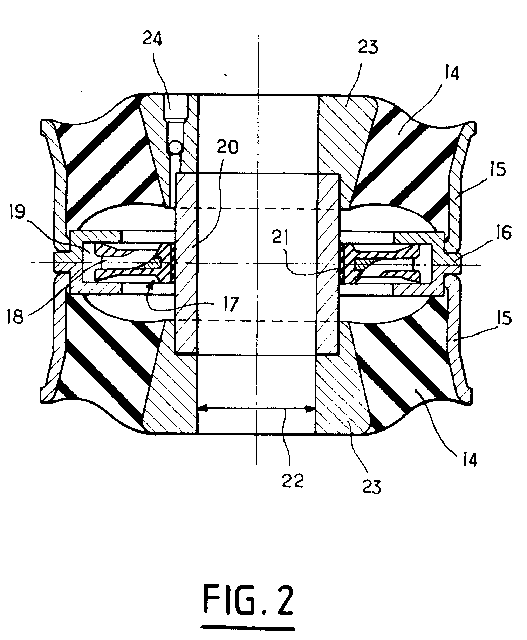

La figure 2 est un agrandissement concernant uniquement la cartouche hydroélastique.

Cet organe apparemment simple, dont la fonction d'attache sur caisse est remplie, dans les dispositifs connus, par un couple de rondelles élastiques enserrant, par boulonnage entre deux coupelles, la fixation sur caisse, assure en outre, dans l'application préférentielle de l'invention, toutes les fonctions attendues d'un amortisseur hydroélastique, reportées sur le point de fixation haute d'un amortisseur hydraulique de type classique.

Agissant en série avec l'effet de l'amortisseur principal de suspension, son rôle spécifique est, d'une part, de découpler la liaison acoustique de l'attache sur caisse, dans certaines conditions précises de fréquences, où les efforts périodiques sont trop faibles pour assurer le glissement de la tige d'amortisseur (2) et du piston et, d'autre part, d'amortir lesdits efforts périodiques.

Dans les dispositifs connus de l'art antérieur, l'absence de glissement de ces éléments dans le tube de l'amortisseur permettait en effet la transmission à la caisse d'accélérations inconfortables, dues en particulier à l'excitation du groupe motopropulseur par les masses non suspendues du véhicule, lors du roulement sur des routes très lisses, phénomène appelé "hachis". Dans des gammes de fréquences le plus souvent voisines de 10 à 12 Hertz, une accélération de 1/100 de la pesanteur est en effet déjà nettement perceptible au corps humain.

L'interposition de la cartouche hydroélastique a un effet notable sur la transmission de ces accélérations et améliore, pour ces raisons, le silence et le confort de l'habitacle.

L'ensemble de cartouche hydroélastique, représenté isolément sur la figure, est limité par les deux membranes épaisses en composition élastomérique (14) qui en sont des éléments constitutifs. Elles sont chacune intimement liées à une frette tubulaire (15) qui constitue le solide externe par lequel l'ensemble est emmanché dans l'alésage de l'armature interne (11) de la pièce de fixation élastique (3). La géométrie représentée implique un emmanchement préalable par chaque face, l'opération servant également à assurer l'étanchéité par une pâte ou colle appropriée.

La représentation de la cartouche hydroélastique seule permet d'expliciter, dans l'application préférentielle à une fixation d'amortisseur, la fonction assurée par le dispositif objet de l'invention, complémentaire à la seule liaison élastique : les membranes épaisses en composition élastomérique (14) enferment un volume réduit de liquide d'amortissement, l'étanchéité latérale étant assurée par le serrage de leurs frettes tubulaires (15), venant buter, dans le plan de symétrie, sur l'épaulement d'une coupelle de confinement rigide (16). Cette pièce, avantageusement réalisée par moulage de plastique renforcé, est formée préférentiellement de deux parties identiques, assemblées par collage, par exemple. Ladite coupelle de confinement rigide (16) enferme un clapet coulissant garni de joints d'étanchéité (17), lesdits joints d'étanchéité étant disposés sur chacune de ses faces.

Toutes les fonctions de la cartouche hydroélastique sont dues, essentiellement, aux particularités de fonctionnement dudit clapet coulissant garni de joints d'étanchéité (17) qui en font un véritable amortisseur hydroélastique.

En effet, une colonne liquide de fuite (18), à forte section, dont le liquide ne présente qu'une faible viscosité, est constituée grâce à une communication de chaque face dudit clapet coulissant garni de joints d'étanchéité (17) avec sa tranche.

Les deux orifices, diamètralement opposés, ouvrant sur la tranche du clapet coulissant garni de joints d'étanchéité (17) permettent, entre chacune de ses faces, une fuite pour le liquide passant par le jeu de forte section (19), le long des deux demi-périphéries dudit clapet coulissant garni de joints d'étanchéité (17). Deux flux du liquide, qui présente une faible viscosité, agissent donc en parallèle entre la coupelle de confinement rigide (16) et les joints d'étanchéité disposés sur chacune des faces du clapet coulissant garni de joints d'étanchéité (17).

S'il se produit un excentrage du clapet coulissant garni de joints d'étanchéité (17), du fait d'une force radiale parasite sur la tige de l'amortisseur (2), force rappelée élastiquement par la rigidité radiale des deux membranes épaisses en composition élastomérique (14), il y a toujours, néanmoins, circulation de liquide, à section totale constante, et, en conséquence, suppression de l'effort exercé par l'amortisseur principal, lors de mouvements axiaux importants relativement lents. Ceci permet de définir des caractéristiques pour ledit amortisseur principal, lui conférant une grande efficacité, sans qu'il perturbe notablement le confort, lors de grands mouvements où son effet se trouve donc effacé par l'existence de la fuite de liquide.

Au contraire, pour les mouvements rapides de roue, l'effet d'inertie agissant sur la masse de la colonne liquide intervient à plein, pour bloquer le passage du liquide d'une face à l'autre du clapet coulissant garni de joints d'étanchéité (17). Ledit effet inertiel est provoqué par le rapport de la section dudit clapet coulissant garni de joints d'étanchéité (17), jouant le rôle d'un piston chassant le liquide d'une face vers l'autre, à celle, beaucoup plus réduite, de la colonne liquide de fuite (18), multipliant dans le même rapport l'accélération subie par le liquide.

Dans ces circonstances, la cartouche hydroélastique se comporterait comme un seul solide élastique si n'existait le clapet coulissant garni de joints d'étanchéité (17). Les faces dudit clapet coulissant garni de joints d'étanchéité (17) sont, en effet, alternativement plaquées contre la coupelle de confinement rigide (16), à travers les joints d'étanchéité.

Les mouvements à fréquence élevée, mais de faible amplitude, sont, alors, complètement filtrés par la course d'écrasement desdits joints d'étanchéité et ne sont donc pas transmis par la tige d'amortisseur (2). Il en est de même, d'ailleurs, de toute composante radiale, filtrée par le jeu radial entre le clapet coulissant garni de joints d'étanchéité (17) et la coupelle de confinement rigide (16).
Le confort vibratoire à des fréquences acoustiques est, de ce fait, considérablement amélioré.
Un effort transversal, permanent ou de variation lente, sur la tige de l'amortisseur (2) provoque un excentrage élastique, cet effort étant équilibré par la rigidité radiale des membranes épaisses en composition élastomérique (14). Par contre, toute composante vibratoire radiale est ainsi totalement "découplée", à faible amplitude, le clapet coulissant garni de joints d'étanchéité (17) pouvant s'excentrer sans aucune transmission d'effort. L'effet inertiel de la colonne liquide de fuite (18) intervient, cependant, au delà d'une amplitude vibratoire périodiquement exercée sur l'excentrage, avec un amortissement contrôlable, différent ou non de l'amortissement axial.

Axialement comme radialement, l'effet du dispositif d'attache hydroélastique, caractérisé par une faible rigidité procurant un filtrage efficace aux basses fréquences, autorise un amortissement visco-élastique de haut niveau aux fréquences intermédiaires, alors que cette rigidité est rendue dynamiquement beaucoup plus élevée par effet d'inertie aux hautes fréquences.

Mesurée par le déphasage entre le déplacement et la réaction dans une sollicitation périodique sinusoïdale, la valeur de l'amortissement, exprimée par la tangente $\Phi$ de ce déphasage peut atteindre 0,50 à la fréquence de 12 Hertz. De ce fait, un taux d'amortissement 1/2.tangente $\Phi$ = 0,25 satisfait le cahier des charges du constructeur.
Ce taux d'amortissement remarquablement élevé a pour conséquence mathématique un coefficient de transmission des vibrations ne dépassant pas 2,3 même en pleine résonance (les forces étant, alors, en quadrature avec le déplacement).

Tout phénomène vibratoire pouvant se cumuler avec un déplacement lent de grande amplitude, ledit clapet coulissant garni de joints d'étanchéité (17) a la possibilité de maintenir son rôle de blocage hydraulique, en se déplaçant, par glissement coulissant sur l'axe cylindrique (20) autour duquel il est engagé, avec étanchéité glissante sur son diamètre intérieur, grâce aux surépaisseurs formant joints d'étanchéité (21) : l'élasticité desdites surépaisseurs formant joints d'étanchéité (21) est mise à profit pour permettre les faibles basculements que la tige d'amortisseur (2), engagée dans l'alésage (22) de l'axe cylindrique (20), peut subir par rapport à la position alignée, sans porter préjudice à l'effet amortissant dû à la colonne liquide de fuite (18) qui contourne le clapet coulissant garni de joints d'étanchéité (17), par le jeu de forte section (19).
Ledit axe cylindrique (20) sert également d'entretoise entre les cônes internes (23), qui constituent l'armature intimement liée aux membranes épaisses en composition élastomérique (14).

L'étanchéité entre l'axe cylindrique (20) et les cônes internes (23), pour le liquide d'amortissement, est assurée par emmanchement serré - lors de l'assemblage - dudit axe cylindrique (20) dans un épaulement de longueur limitée, ménagé dans chaque cône interne (23).

Le remplissage, par le liquide de faible viscosité, de la cartouche hydroélastique se fait, au cours de cet assemblage ou immédiatement après, grâce à un trou de purge (24), obturé ensuite, par exemple par une vis, un pion ou une bille forcée dans ledit trou de purge (24), comme représenté.

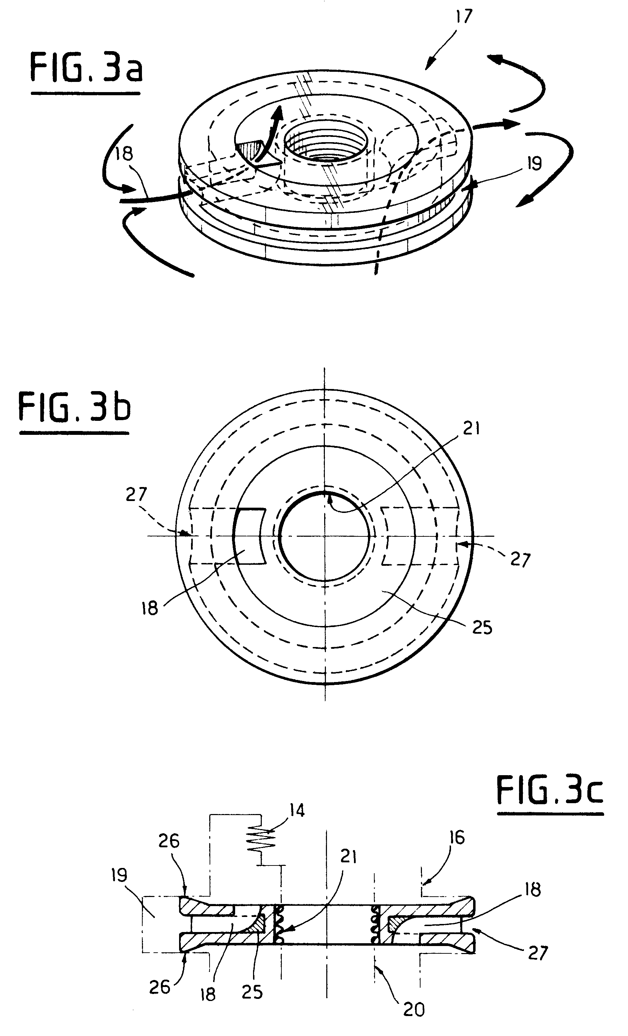

La figure 3 représente uniquement le clapet coulissant garni de joints d'étanchéité (17), en perspective, vue et coupe.

La vue 3a propose une perspective montrant, simultanément, comment une colonne liquide de fuite (18), contenue dans une rainure courbe ménagée dans l'épaisseur de la partie métallique formant le clapet garni de joints d'étanchéité (17), met en communication une face de celui-ci et le jeu de forte section (19) qui est enfermé entre sa tranche et la coupelle de confinement rigide (16) qui l'entoure.

La vue 3b est une vue de dessus, en plan, du clapet coulissant garni de joints d'étanchéité (17), formé d'une rondelle métallique (25), fraisée sur chaque face de façon à réaliser la communication par la colonne liquide de fuite (18) avec le trou sur la tranche (27). Ledit trou sur la tranche (27) est dégagé par la forme du moule lorsque sont réalisés les joints d'étanchéité plans (26), en composition élastomérique, par l'intermédiaire desquels sera enfermé, entre les deux faces internes de la coupelle de confinement rigide (16), le clapet coulissant garni de joints d'étanchéité (17). L'alésage de la rondelle métallique (25) comporte également les surépaisseurs formant joints d'étanchéité (21) qui donnent la possibilité de basculement étanche du clapet coulissant garni de joints d'étanchéité (17) sur l'axe cylindrique (20) qui le porte.

La vue 3c est une coupe axiale dudit clapet coulissant garni de joints d'étanchéité (17), coupant la rondelle métallique (25) par les deux trous sur la tranche (27), en correspondance avec les rainures courbes qui guident les deux colonnes liquides de fuite (18) vers chaque face du clapet coulissant garni de joints d'étanchéité (17). Ces rainures courbes débouchent, en retrait, sur la face plane, à l'intérieur de chaque joint d'étanchéité plan (26).

Le fonctionnement du clapet coulissant garni de joints d'étanchéité (17) peut être explicité à partir de cette vue où les liaisons extérieures sont schématisées en traits mixtes.

Libre de tout déplacement radial par excentrage permis par son glissement entre les deux faces planes de la coupelle de confinement rigide (16) qui l'encadrent, car centré par l'axe cylindrique (20) sur lequel portent les surépaisseurs formant joints d'étanchéité (21) et non par l'extérieur, le clapet coulissant garni de joints d'étanchéité (17) est une masse très légère de métal et de composition élastomérique qui peut se débattre axialement à haute fréquence - acoustique - et faible amplitude, entre l'écrasement de chaque joint d'étanchéité plan (26). Ce phénomène résonant, où ledit clapet coulissant garni de joints d'étanchéité (17) joue le rôle de batteur, abaisse la rigidité apparente de la liaison élastique entre la tige d'amortisseur (2) et la caisse (4) du véhicule auxdites fréquences.

Dès qu'un mouvement axial lent permet au liquide de faible viscosité de communiquer par le jeu de forte section (19) entre chaque face du clapet coulissant garni de joints d'étanchéité (17), la rigidité statique des deux membranes épaisses en composition élastomérique (14) permet à l'amortisseur principal de suspension d'entrer en jeu par la réaction quasistatique de celles-ci. Si le mouvement de grande amplitude est rapide, l'effet inertiel de la colonne de liquide exerce une différence de pression entre les deux faces du clapet coulissant garni de joints d'étanchéité (17), malgré la possibilité de communication entre elles.

Au delà de la faible course permise par l'écrasement des joints d'étanchéité plans (26), la grande rigidité dynamique axiale apparente de la liaison élastique est effacée par le glissement des surépaisseurs formant joints d'étanchéité (21), sur l'axe cylindrique (20).

La différentielle de pression provoque ce glissement malgré le serrage de quelques decaNewton nécessaire à l'étanchéité. Il est bien connu des techniciens dans le domaine antivibratoire qu'entre ces deux phénomènes - l'un résultant de la simple rigidité statique axiale, l'autre du blocage par effet inertiel hydraulique - se produit un maximum d'amortissement dû au déphasage.

Cette grandeur peut être mesurée sous forme d'amortissement visco-élastique, quoiqu'en réalité le découplage de la liaison élastique tige-caisse, à raideur apparente abaissée, soit dû à l'intervention d'une inertie de liquide sans aucun caractère visqueux. Ainsi, l'amortisseur principal de suspension agit dans les débattements pour lesquels il est conçu, mais paraît virtuellement désaccouplé pour les mouvements périodiques de fréquences acoustiques.

Dans les dispositifs connus, lors des excitations de la fréquence propre des masses non suspendues, l'amortisseur principal apparait bloqué - ce phénomène étant qualifié de "hachis" lorsqu'il excite le débattement du groupe motopropulseur - alors que, dans le dispositif objet de la présente invention, l'amortisseur principal se trouve placé en série avec le dispositif d'attache élastique à amortissement intégré de taux élevé, qui limite la transmission de ce phénomène résonant.

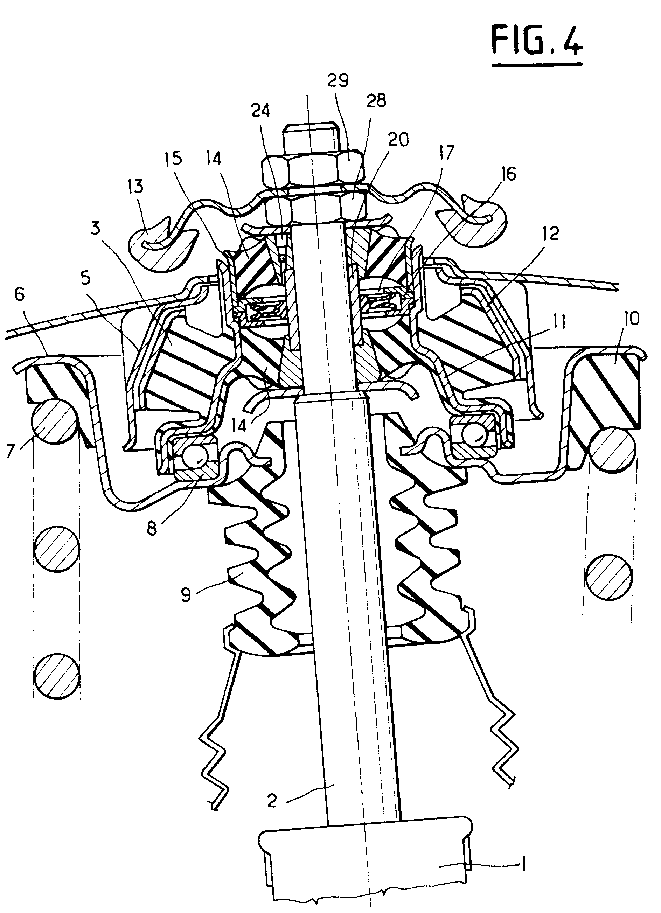

La figure 4 représente, dans des conditions identiques à celles de la figure 1, une variante préférentielle du dispositif d'attache hydroélastique, destinée à réduire le nombre des composants pour une fabrication économique en grande série.

Pour une même disposition du ressort de suspension (7), en appui sur la coupelle supérieure (6), à travers un appui élastique de ressort (10), et de la butée de limitation dynamique des débattements (9), les efforts statique et dynamique s'exercent tous deux à travers la butée à billes (8), sur l'armature interne (11) de la pièce de fixation élastique (3).

Dans cette variante, ladite armature interne (11) fait matériellement partie intégrante de la cartouche hydroélastique - dont le fonctionnement demeure inchangé - du fait que ladite armature interne (11) est intimement liée, par adhérisation in situ par exemple, à l'une des membranes épaisses en composition élastomérique (14). La couche sensiblement conique d'épaisseur centimétrique qui forme la pièce de fixation élastique (3) est donc fabriquée au cours de l'opération de moulage de ladite membrane épaisse en composition élastomérique (14), avec adhérisation simultanée in situ à l'armature externe (12), éventuellement intégrée au renfort de fixation (5).

La préparation du clapet coulissant garni de joints d'étanchéité (17) consiste à l'engager sur l'axe cylindrique (20) et à l'enfermer dans la coupelle de confinement rigide (16), réalisée en deux parties assemblées, par exemple par collage. cet assemblage est simultané à l'emmanchement à la presse de la seconde membrane épaisse en composition élastomérique (14) : sa frette tubulaire (15) est engagée, avec un mastic d'étanchéité approprié, dans l'armature interne (11) de la pièce de fixation élastique (3), tandis que l'axe cylindrique (20) doit s'emboiter dans les épaulements de chaque cône interne (23).

Il serait éventuellement possible, mais peu économique, d'intégrer ces trois objets en une seule pièce.

En effet, l'axe cylindrique (20) qui sert d'entretoise nécessite un état de surface soigné, par exemple chromé, pour porter avec glissement les surépaisseurs formant joints d'étanchéité (21) du clapet coulissant garni de joints d'étanchéité (17) ; au contraire, les cônes internes (23) sont de précision mécanique beaucoup plus limitée et subissent le cycle thermique et les manipulations qui les intègrent, lors du moulage, à chaque membrane épaisse en composition élastomérique (14).

La constitution d'une couche élastomérique formant étanchéité est également possible sur la surface desdits cônes internes (23) qui vient au contact de l'axe cylindrique (20).

Cette dernière étanchéité est nécessaire pour éviter la perte du liquide de remplissage, généralement un liquide antigel eau/glycol donc de faible viscosité, en direction de la tige de l'amortisseur (2), disposée dans l'alésage de l'ensemble ainsi constitué.

Le remplissage du volume relativement réduit, enclos par les membranes épaisses en composition élastomérique (14), peut se faire "en sous-marin" lors de l'emmanchement simultané, ou bien par opérations alternées de mise au vide et de remplissage par le trou de purge (24).

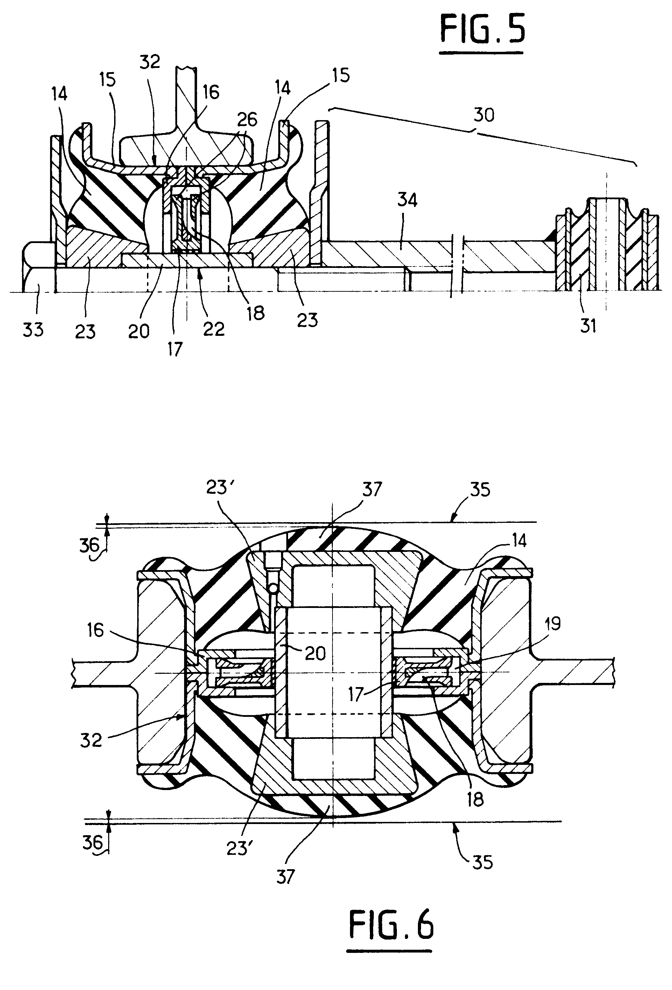

La figure 5 est l'illustration, en demi-coupe axiale, d'une application à une biellette de liaison géométrique, trouvant avantageusement une application comme reprise de couple dans la suspension d'un groupe motopropulseur : la masse de ce dernier, élastiquement isolée du chassis, peut être disposée de manière à ce que son centre de gravité se trouve sensiblement à cheval sur des supports élastiques, très souples dans le sens vertical et de forte rigidité dans le sens horizontal.

Les réactions du couple moteur et de frein moteur démultipliées par le système de transmission sont alors reprises par une biellette sensiblement horizontale (30), fixée à la caisse et au groupe motopropulseur, à une extrêmité, par une bague élastique classique (31) et, à l'autre extrêmité, par une cartouche hydroélastique en tous points identique à celle décrite précédemment.

En effet, les frettes tubulaires (15) peuvent être fixées par emmanchement dans un logement cylindrique (32), jouant le même rôle que l'armature interne (11) de la pièce de fixation élastique (3) décrite précédemment.

Les deux cônes internes (23) se trouvent assemblés par l'alignement de leurs alésages avec l'alésage (22) de l'axe cylindrique (20) qui les entretoise au moyen d'une vis d'assemblage (33) vissée dans le corps tubulaire fileté de la bielle (34). Les deux membranes épaisses en composition élastomérique (14) assurent, par leur déformation d'ensemble, sous l'effet d'un couple permanent, une grande flexibilité, définissant une position d'équilibre au clapet garni de joints d'étanchéité (17), par coulissement sur l'axe cylindrique (20).

Dans ces circonstances de transmission d'effort permanent, ledit clapet garni de joints d'étanchéité (17) se débat, néanmoins, à haute fréquence, dans la coupelle de confinement rigide (16), en provoquant l'écrasement axial des joints d'étanchéité plans (26) et le déplacement radial, sans contraintes, dans le jeu de forte section (19).

Lors des déplacements verticaux ou transversaux du groupe motopropulseur, les variations angulaires de la biellette sensiblement horizontale (30) provoquent un basculement sur l'axe cylindrique (20) dudit clapet coulissant garni de joints d'étanchéité (17), ledit basculement étant autorisé par l'élasticité des surépaisseurs formant joints d'étanchéité (21).

Lorsqu'un phénomène vibratoire se produit au lâcher de pédale ou démarrage à bas régime dit "jerky ride", des pulsations à basse fréquence, par exemple à 4 Hertz environ, ont tendance à exciter un mode propre, en résonance avec les pulsations du couple moteur.

Le transfert de liquide d'amortissement par les colonnes liquides de fuite (18) est optimisé alors, de façon à procurer un amortissement desdites pulsations de valeur viscoélastique pouvant atteindre tg $\Phi$ = 0,50, soit 25 % de l'amortissement critique, évitant ainsi, le plus qu'il est possible, la transmission à l'habitacle de ces accélérations inconfortables.

Une biellette de liaison géométrique telle que représentée peut trouver également son application dans une attache sur caisse de la triangulation inférieure d'un ensemble de suspension par strut pour véhicule.

La figure 6 illustre, en coupe axiale, l'usage d'une même cartouche hydroélastique utilisée comme attache hydroélastique de suspension venant alternativement en butée simple entre deux appuis rigides (35), chacun symbolisé par un plan. Lesdits plans étant fixes sur le chassis par exemple, le logement cylindrique (32) est ménagé sur un carter du groupe motopropulseur.

Le rôle du jeu limité (36) est applicable à la reprise de couple moteur, par réaction sur des appuis élastiques appropriés, dans les mêmes conditions que l'usage d'une biellette, des butées progressives (37) étant ménagées en bout des cônes internes (23') disposés, non débouchants, autour de l'enceinte confinant un volume réduit de liquide d'amortissement, lesdites butées progressives (37) faisant ainsi partie intégrante de la cartouche hydroélastique.

Dans cet usage, la valeur constante du couple moteur ou frein est exercée par appui d'une butée progressive (37) sur l'un des appuis rigides (35). La réaction exercée par déformation axiale des deux membranes épaisses en composition élastomérique (14) déplace donc le clapet garni de joints d'étanchéité (17), par coulissement sur l'axe cylindrique (20).

Les efforts parasites pouvant s'exercer tangentiellement, par friction de la butée progressive (37) sur l'appui rigide (35), justifient le rôle du jeu de forte section (19), autorisant les excentrages des membranes épaisses en composition élastomérique (14), comme de légers basculements éventuels sur l'axe cylindrique (20), grâce à l'élasticité des surépaisseurs formant joints d'étanchéité (21).

Dans ces déformations, le clapet garni de joints d'étanchéité (17) continue à battre, à très faible inertie, dans la coupelle de confinement rigide (16), sans transmettre les vibrations de haute fréquence. Par contre, le rôle amortisseur à faible fréquence des pulsations appliquées sur le couple moteur est bien exercé par l'effet inertiel de la colonne liquide à forte section, liquide transitant par la colonne liquide de fuite (18), le long du jeu de forte section (19). Son effet est donc de réduire notablement la transmission des pulsations de couple moteur dit "jerky ride", pour leur éviter de se traduire en accélérations périodiques à basse fréquence, par exemple 4 Hertz environ. De telles accélérations sont perçues comme fort inconfortables dès une intensité évaluée dans les normes de confort à 0,1g, soit 1 m/s2, et perceptibles dès 0,005 g, soit 5 cm/s2.

Le procédé de fabrication préférentiel s'applique à la réalisation d'une attache hydroélastique pour le point haut d'un strut de suspension comme à celle de la cartouche hydroélastique utilisée en reprise de couple, avec biellette ou avec butées. Il comprend la fabrication préalable, par moulage, de trois pièces utilisant, par exemple, l'adhérisation in situ d'une composition élastomérique à des armatures rigides, de préférence métalliques. Lesdites armatures rigides sont obtenues par déformation de métal en feuille ou, préférentiellement, à partir d'une ébauche tubulaire. La finition de la rondelle métallique (25), constituant du clapet coulissant garni de joints d'étanchéité (17), est assurée par fraisage et perçage latéral.

La constitution de ce premier sous-ensemble demande encore, pour qu'il soit prêt à être livré sur chaîne de montage automobile, l'assemblage de la butée à billes (8), par son emmanchement, également, dans l'armature interne (11) de la pièce de fixation élastique (3).

La préparation ultérieure d'un strut comprend la pose, sur ce premier sous-ensemble, du ressort de suspension (7), de son appui élastique (10) et de la butée de limitation dynamique des débattements (9) sur la coupelle supérieure (6), avant le montage du tout sur l'amortisseur formant strut (1), avec une précompression dudit ressort de suspension (7). Cet ensemble sous contrainte est retenu par le premier écrou (28) et manipulable, isolément, en usine.

En effet, dans la disposition représentée, c'est la cartouche hydroélastique qui assure le maintien de cette précompression sur le strut ainsi provisoirement préparé. Après montage sur voiture, le serrage de la butée de détente (13) par le second écrou (29) vient se substituer à cette fonction temporaire, jusqu'alors assurée par la cartouche hydroélastique et libère les membranes épaisses en composition élastomérique (14) de toute contrainte permanente.

D'une manière similaire, une biellette anti-couple, comme une attache hydroélastique à butées incorporées remplissant la même fonction, peuvent être réalisées comme décrit pour le premier sous-ensemble.

L'attache hydroélastique de suspension faisant l'objet de l'invention présente, par rapport aux dispositifs connus de l'art antérieur, les avantages suivants :

– par un montage en lieu et place de blocs de caoutchouc antérieurement utilisés, elle assure un filtrage acoustique considérablement accru de la voie solidienne entre la caisse ou le chassis et les sources de bruit ;

– outre un filtrage radial et axial total des vibrations, elle procure un amortissement très efficace des accélérations dues à la transmissibilité résiduelle de la chaîne solidienne, au voisinage de la fréquence de résonance entre masses ;

– grâce au glissement interne du clapet coulissant garni de joints d'étanchéité sur l'axe cylindrique qui le porte, sa flexibilité apparente élevée lors des débattements lents permet de modifier la position à laquelle se produit l'effet de butée hydroélastique ;

– elle se comporte, cependant, comme une butée hydroélastique efficace, par une rigidité élevée lors des débattements fonctionnels ;

– les dimensions généreuses de ses pièces sont garantes - par les faibles contraintes qui en résultent - d'une bonne tenue à la fatigue ;

– l'échange de pièces, lors des opérations de réparation, demeure aussi facilement réalisable ;

– lorsque l'attache hydroélastique est utilisée au point haut d'un amortisseur principal de suspension, la réalisation de celui-ci peut être simplifiée car ses constituants sont protégés des petites oscillations les plus fréquentes qui les fatiguent.

Bien entendu, l'homme de l'art pourra associer, à divers types de fixations élastiques, des combinaisons des variantes de l'attache hydroélastique objet de l'invention, y compris dans des domaines autres que ceux de la suspension automobile, sans sortir du cadre de l'invention.

**Revendications**

1. Attache hydroélastique de suspension sur caisse de véhicule ou sur machine à poste fixe, formée de deux membranes épaisses en composition élastomérique (14) enfermant un volume relativement réduit de liquide, l'ensemble formant une cartouche hydroélastique, à colonne liquide de fuite (18) comportant un liquide de faible viscosité, destinée à neutraliser la transmission de vibrations pour un point d'attache sur chassis, caractérisée en ce que, dans ladite cartouche hydroélastique, un clapet garni de joints d'étanchéité (17), coulissant sur un axe cylindrique (20), est libre de se débattre, axialement et radialement, dans une coupelle de confinement rigide (16),
en ce que ledit clapet coulissant garni de joints d'étanchéité (17) est, lui-même, contourné par la circulation de ladite colonne liquide de fuite (18) faisant communiquer entre elles, par un jeu de forte section (19), les chambres opposées sur les deux faces dudit clapet coulissant muni de joints d'étanchéité (17),
et en ce que le rôle inertiel de ladite colonne liquide de fuite (18), lors de l'application d'un effet de butée, provoque un amortissement de haut niveau des vibrations transmises, dues au mouvement résonant entre masses.

2. Attache hydroélastique de suspension selon la revendication 1, caractérisée en ce que, pour application au point de fixation haute d'un amortisseur télescopique sur caisse, dans une suspension de véhicule du type MacPherson, portant la fusée d'une roue directrice ou non, la liaison élastique est libérée des efforts de suspension par report de ceux-ci sur une pièce de fixation élastique (3), concentrique à ladite cartouche hydroélastique, les efforts statiques du ressort de suspension (7) et ceux d'une butée de limitation dynamique des débattements (9) s'exerçant à travers une butée à billes (8) sur l'armature interne (11) de ladite pièce de fixation élastique (3).

3. Attache hydroélastique d'amortisseur télescopique selon la revendication 2, caractérisée en ce que l'amortissement de la liaison élastique assurée par les deux membranes épaisses en composition élastomérique (14) entre la tige d'amortisseur (2) et la caisse du véhicule (4), mesuré par l'amortissement visco-élastique à la fréquence de 10 à 12 Hertz, atteint la valeur 1/2 tangente $\Phi = 0,25$ sur la rigidité de la liaison élastique.

4. Attache hydroélastique d'amortisseur télescopique selon la revendication 2, caractérisée en ce que le clapet coulissant garni de joints d'étanchéité (17) est muni, sur son diamètre intérieur, de surépaisseurs formant joints d'étanchéité (21) sur l'axe cylindrique (20), permettant audit clapet coulissant garni de joints d'étanchéité (17) de glisser et, également, de basculer par rapport à la pièce de fixation élastique (3) lorsque des efforts notables, radiaux ou de basculement, sont exercés par la tige d'amortisseur (2), le glissement se produisant sans porter préjudice à l'effet amortissant dû à la colonne liquide de fuite (18) qui contourne le clapet coulissant garni de joints d'étanchéité (17) par le jeu de forte section (19), aussi bien en débattement axial qu'en débattement radial.

5. Attache hydroélastique d'amortisseur télescopique selon l'une des revendications 2 à 4, caractérisée en ce que la cartouche hydroélastique, formée des deux membranes épaisses en composition élastomérique (14) et du volume relativement réduit de liquide, fait partie intégrante de la pièce de fixation élastique (3), par liaison intime due à une adhérisation in situ de son armature interne (11) à l'une des membranes épaisses en composition élastomérique (14).

6. Attache hydroélastique de suspension selon la revendication 1, caractérisée en ce que, pour application à la reprise de couple moteur ou frein moteur, la réaction audit couple est reprise par une biellette sensiblement horizontale (30), fixée à la caisse et au groupe motopropulseur, à l'une de ses extrémités par l'ensemble constituant la cartouche hydroélastique.

7. Attache hydroélastique de suspension selon la revendication 1, caractérisée en ce que, pour application à la reprise de couple moteur ou frein moteur, la réaction audit couple est reprise par appui de deux butées progressives (37) sur des appuis rigides (35), ces butées étant partie intégrante de la cartouche hydroélastique.

8. Attache hydroélastique de suspension selon l'une des revendications 6 ou 7, caractérisée en ce que l'amortissement de la liaison élastique assurée par les deux membranes en composition élastomérique (14), mesuré par l'amortissement visco-élastique à la fréquence de 4 Hertz environ, atteint la valeur 1/2 tangente Φ = 0,25 sur la rigidité de la liaison élastique.

9. Attache hydroélastique de suspension selon la revendication 6, caractérisée en ce que le clapet coulissant garni de joints d'étanchéité (17) est muni, sur son diamètre intérieur, de surépaisseurs formant joints d'étanchéité (21) sur l'axe cylindrique (20), permettant audit clapet coulissant garni de joints d'étanchéité (17) de glisser et, également, audit axe cylindrique (20) de basculer par rapport à l'axe du logement cylindrique (32), lorsque des efforts notables, radiaux ou de basculement, sont exercés par la biellette sensiblement horizontale (30) dans ses débattements verticaux ou transversaux.

10. Attache hydroélastique de suspension selon la revendication 7, caractérisée en ce que le clapet coulissant garni de joints d'étanchéité (17) est muni, sur son diamètre intérieur, de surépaisseurs formant joints d'étanchéité (21) sur l'axe cylindrique (20), permettant audit clapet coulissant garni de joints d'étanchéité (17) de glisser et audit axe cylindrique (20) de basculer par rapport à l'axe du logement cylindrique (32), lorsque des efforts parasites s'exercent tangentiellement par friction de l'une des butées progressives (37) sur un appui rigide (35).

11. Biellette de liaison géométrique caractérisée en ce que l'une de ses extrémités est liée à une attache hydroélastique de suspension conforme à la revendication 1, pour assurer la fixation sur caisse d'une triangulation inférieure d'un ensemble de suspension par strut pour véhicule.

# FIG.1

# FIG. 2

FIG.3a

FIG.3b

FIG.3c

# FIG.4

FIG.5

FIG.6

# EP 0 490 724 A1

**Office européen des brevets**

## RAPPORT DE RECHERCHE EUROPEENNE

Numero de la demande

EP 91 40 3203

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 255 508 (P.PELAT) <br> * page 8, ligne 21 - page 9, ligne 16; figure 5 * <br> --- | 1 | F16F13/00 <br> B60G15/06 <br> B60G7/02 |
| A | EP-A-0 268 785 (CONTINENTAL AG) <br> * abrégé; figures * <br> --- | 1 | |
| A | PATENT ABSTRACTS OF JAPAN <br> vol. 13, no. 385 (M-864)(3733) 25 Août 1989 <br> & JP-A-1 135 940 ( TOYOTA MOTOR CORP ) 29 Mai 1989 <br> * abrégé * <br> --- | 1,4 | |
| A | PATENT ABSTRACTS OF JAPAN <br> vol. 10, no. 204 (M-499)(2260) 17 Juillet 1986 <br> & JP-A-61 045 131 ( KURASHIKI KAKO KK ) 5 Mars 1986 <br> * abrégé * <br> --- | 1 | |
| A | DE-A-3 043 743 (CONTINENTAL GUMMI-WERKE AG) <br> * le document en entier * <br> --- | 2 | **DOMAINES TECHNIQUES RECHERCHES (Int. Cl.5)** |
| A | PATENT ABSTRACTS OF JAPAN <br> vol. 14, no. 428 (M-1025)(4371) 14 Septembre 1990 <br> & JP-A-2 169 313 ( TOYO TIRE & RUBBER CO LTD ) 29 Juin 1990 <br> * abrégé * <br> ----- | 11 | F16F <br> B60G |

Le présent rapport a été établi pour toutes les revendications

| Lieu de la recherche | Date d'achèvement de la recherche | Examinateur |
|---|---|---|
| LA HAYE | 27 MARS 1992 | PEMBERTON P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)